# EUROPÄISCHE PATENTSCHRIFT

(11) **EP 1 293 855 B1**
(45) Veröffentlichungstag und Bekanntmachung des Hinweises auf die Patenterteilung: **18.08.2004**
(21) Anmeldenummer: 02027886.7
(22) Anmeldetag: 13.12.2000
(51) Int. Cl.: G05D 23/13

(54) **Verfahren zur Mischwasserbereitung**
Method for preparing mixed water
Procédé d'obtention d'eau mitigée

(30) Priorität: 18.12.1999 DE 19961183
(43) Veröffentlichungstag der Anmeldung: 19.03.2003
(62) Teilanmeldung aus: 00990591.0
(73) Patentinhaber: Innotech Electronic GmbH, 76646 Bruchsal (DE)
(72) Erfinder: Wack, Volker, 76646 Bruchsal (DE); Petzold, Heiko, 68794 Rheinhausen (DE)
(74) Vertreter: Geitz Truckenmüller Lucht

(56) Entgegenhaltungen:
- DE-A- 4 026 110
- DE-A- 4 401 637
- GB-A- 2 056 627
- US-A- 4 646 964
- US-A- 5 588 636

## Beschreibung

Die Erfindung betrifft ein Verfahren zur Mischwasserbereitung, bei dem ein über eine Bedieneinheit eingebbarer vorgebbarer Sollwert über eine elektronische Regeleinheit in Abhängigkeit von einem mittels eines Temperatursensors erfaßten Ist-Wert mittels eines mechanischen Stellgliedes auf eine Regelstrecke zur Mischwasserbereitung einwirkt.

Eine derartig elektronische Mischwasseraufbereitung ist aus der DE 40 26 110 vorbekannt. Es handelt sich dabei um eine Mischwasserbereitungsanlage mit Kalt- und Warmwasser-Zuflüssen, sowie ein Mischwasserabfluß und einem vor der Mischkammer angeordneten Regelventil, dem eine elektronische Regeleinrichtung sowie eine digital arbeitende Steuerund Recheneinheit zugeordnet ist. Die Steuer- und Recheneinheit arbeitet mit einem Programmspeicher zusammen. Die Mischwasseraufbereitung kann entweder anhand der über eine Bedieneinheit eingegebenen Vorgaben oder aufgrund der Vorgaben eines im Programmspeicher abgelegten Steuerprogramms erfolgen.

Dieser Entwicklung liegt insbesondere die Aufgabe zugrunde, bereits bestehende Mischwasserbatterien mit einer elektronischen Regelung nachzurüsten. Nachteil dieses Nachrüstbausatzes ist, daß es sich um ein zusätzliches externes Gerät handelt, das insbesondere im Bereich privater Anwendungen platzbedingt nur selten einsetzbar ist, da die Platzverhältnisse im Bäderbereich beengt sind und überdies eine derart hochwertige Mischwasseraufbereitung mit optischen Beeinträchtigungen durch ein nur auf Putz zu montierendes Zusatzgerät verbunden sind, das üblicherweise als optisch wenig ansprechend empfunden wird. Die "Auf-Putz-Montage" des Zusatzgerätes ist auch deshalb zwingend, weil es Sinn und Zweck der vorbekannten Vorrichtung ist, den dem Regelventil zugeordneten Programmspeicher bedarfsweise auswechseln zu können. Hierzu muß das Gerät zwangsläufig frei zugänglich montiert sein.

Eine vergleichbare elektronische Mischwasseraufbereitung ist auch aus der GB-A-2 056 627 bekannt geworden. Dabei wirkt ein Motor über einen Getriebemechanismus auf eine in Richtung ihrer Längsachse transversal verschiebliche Kolbenstange, die an ihrem freien Ende ein hohlzylindrisches Ventilelement zum wahlweise Verschließen eines Warmund Kaltwasserzulaufs aufweist. Zur Betätigung des Ventils kann das Ventilelement über die durch den Motor transversal hin- und her bewegliche Kolbenstange entsprechend bewegt werden. Diese Ventilkonstruktion ist aufwendig. Der für eine bestimmte Druchflußmenge benötigte Bauraum ist vergleichsweise groß. Mit derartigen Proportionalventilen lassen sich nur begrenzte Reaktions- beziehungsweise Schaltzeiten erreichen. Die Abdichtung der Kolbenstange gegenüber dem Ventilgehäuse ist aufwendig und bedingt durch den vergleichsweise großen Transversalhub tritt ein erhöhter Verschleiß auf.

Der Erfindung liegt daher die Aufgabe zugrunde, ein Verfahren zur elektronischen Mischwasseraufbereitung zu schaffen, das die im Stand der Technik bestehenden Nachteile vermeidet und für den Heim- und Haushaltsbereich geeignet ist.

Die der Erfindung zugrundeliegende Aufgabe wird durch ein Verfahren gemäß Anspruch 1 gelöst.

Dabei kann die gesamte Mischwasseraufbereitung mittels eines Temperatursensors als einzigem Sensor dadurch erfolgen, daß neben der bloßen Ist-Wert-Erfassung der Temperatur eine Gradientenauswertung des festgestellten Temperaturverlaufs durchgeführt wird. Der Verlauf des Temperaturgradienten erlaubt es, festzustellen, ob ein Wasserdurchfluß stattfindet.

Das erfindungsgemäße Verfahren gestattet somit eine Durchflußerkennung ohne einen entsprechenden Durchflußsensor.

Erfindungsgemäß wird die Nachführung des Stellgliedes abgeschaltet, sobald und solange der Gradient des Temperaturverlaufs unterhalb eines vorgebbaren Schwellwertes sinkt. Dies bedeutet in konkreter Ausgestaltung, daß eine Temperaturregelung nur dann erfolgt, wenn tatsächlich auch ein Wasserdurchfluß erfolgt.

Durch die Abschaltung des Stellgliedes, vorzugsweise eines Schrittmotors, wird ein unnötiger Stromverbrauch sowie ein vorzeitiger Verschleiß der unter Putz montierten Teile vermieden. Ansonsten würden die mechanisch beweglichen Teile des Regelventils auch ohne Wasserdurchlauf ständig bewegt werden.

Schließlich kann bei dem erfindungsgemäßen Verfahren zwischen wenigstens zwei Temperaturregelbereichen unterschiedlicher Regelgenauigkeit unterschieden werden. Hierdurch ist es möglich, daß innerhalb des üblichen Nutzbereichs eine Feinregelung vorgesehen wird. Dieser Bereich kann beispielsweise mit einer Regelgenauigkeit von einem Zehntel oder einem halben Grad ausgestattet sein. Außerhalb des üblichen Nutzungsbereiches ist eine derartige Regelgenauigkeit nicht erforderlich. Dieser Bereich muß lediglich erfaßt werden können, da die äußeren Umgebungsbedingungen, insbesondere die Umgebungstemperatur, feststellbar sein müssen. Um von diesem Grobregelbereich in den Feinregelbereich zu verfahren, muß allerdings nicht mit letzter Genauigkeit gearbeitet werden. Auch diese Unterscheidung zwischen einer Grob- und einer Feinregelung stellt eine Maßnahme zur Erhöhung der Lebensdauer der Anlage dar, da auch hierdurch unnötige Stellgliedbewegungen vermieden werden.

Dieses Merkmal kann dadurch weiter ausgestaltet werden, daß die Nachführung des Stellgliedes auch außerhalb eines definierten Temperaturbereiches unterbunden wird. Auch dies stellt eine Maßnahme dar, um unnötigen Verschleiß- und Energieverbrauch zu vermeiden.

In weiterer vorteilhafter Ausgestaltung wird das erfindungsgemäße Verfahren zur Gradientenauswertung des Temperaturverlaufs für eine Übertemperatur- und/oder zur Kaltwasserausfallerkennung genutzt. Die Übertemperaturerkennung ist ein wichtiges Sicherheitsmerkmal im Haushaltsbereich, um ein Verbrühen des Benutzers zu verhindern. Dem gleichen Ziel dient es, rechtzeitig zu erkennen, ob eventuell die Kaltwasserzuführung unterbrochen ist. Ein Kaltwasserausfall führt ansonsten im ersten Moment ebenfalls zu einem überhitzten Wasserauslauf der aus Sicherheitsgründen unbedingt zu vermeiden ist.

Ein weiteres Leistungsmerkmal des erfindungsgemäßen Verfahrens liegt darin, daß die Reglereinheit selbstparametrierend ausgelegt ist. Bei der ersten Inbetriebnahme wird wenigstens eine Grenze des Regelbereichs angefahren und im weiteren Betrieb anhand erfolgreich geregelter Temperaturen ein Histogramm, der den jeweiligen Temperaturvorgaben entsprechenden Stellgliedstellungen angelegt. Das System ist demnach selbsteinstellend und vor allem selbstlernend, da die Histogramme im Betrieb ständig bearbeitet und aktualisiert werden und überdies mit zunehmender Betriebsdauer der Anlage immer genauer werden.

Das der Reglereinheit zugeordnete Speicherelement kann ferner mit Vorteil dazu genutzt werden, daß der bereits erwähnte Feinregelbereich durchaus unterschiedlich definiert sein kann. So kann zwischen einzelnen Benutzerprofilen unterschieden werden. So ist beispielsweise der für Kleinkinder einzusetzende Temperaturbereich ein anderer als für erwachsene Personen.

Dies kann durch die Ablage entsprechender Benutzerprofile in dem genannten Speicherelement berücksichtigt werden.

In abermals vorteilhafter Ausgestaltung ist die Reglereinheit mit einer Betriebsdatenerfassung verbunden. Hierdurch können weitere Komfortmerkmale wie ein Betriebsstundenzähler oder die Vorgabe von Wassernutzungszeiten im Hoteloder Gaststättenbereich realisiert werden.

Schließlich können auch feste Steuerprogramme programmiert und abgerufen werden, wie beispielsweise ein Programm zur thermischen Desinfektion, bei dem ein extrem hoher Temperaturbereich für einen definierten Zeitraum angefahren wird. Ein derartiges Programm ist beispielsweise zur thermischen Desinfektion bei der Legionellenbekämpfung ausgesprochen wertvoll.

Die Erfindung wird nachstehend anhand eines in der Zeichnung nur schematisch dargestellten Ausführungsbeispiels näher erläutert. Es zeigen:
- Fig. 1: Eine Prinzipdarstellung eines elektronischen Mischwassserbereiters im Blockschaltbild;
- Fig. 2: eine Geräteeinheit zur Mischwasserbereitung im Querschnitt;
- Fig. 3: eine Bedieneinheit des Mischwasserbereiters;
- Fig. 4: ein Blockschaltbild der Reglereinheit mit Ein- und Ausgängen und
- Fig. 5: ein Flußdiagramm zur Temperaturregelung.

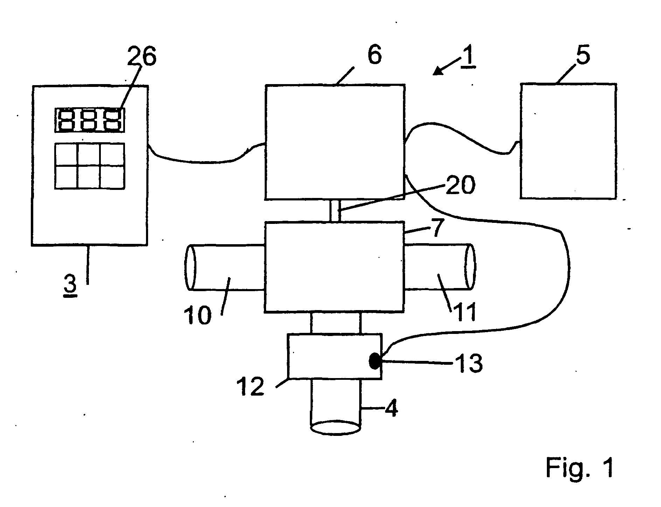

Fig. 1 zeigt einen elektronischen Mischwasserbereiter 1. Der Mischwasserbereiter 1 besteht im wesentlichen aus einer kompakten Geräteeinheit 2, die vollständig unter Putz montiert werden kann. Die Geräteeinheit 2 steht mit einer Bedieneinheit 3 bzw. einer Armatur in Datenverbindung. Die Einheit 3 steht zumeist in einem funktionalen Zusammenhang mit einem Wasserauslaß, der über den Auslauf 4 der Geräteeinheit 2 bedient wird. Die Geräteeinheit 2 ist ferner mit einem Schnittstellenmodul 5 verbunden. Das Schnittstellenmodul 5 kann entweder räumlich entfernt von der Geräteeinheit 2 oder integriert in die Geräteeinheit 2 sein. Hierbei ist das Schnittstellenmodul 5 in jedem Fall so montiert, daß an die Schnittstelle von außen Diagnose- und/oder Programmiergeräte anschließbar sind. Beispielsweise kann eine RS 485-Schnittstelle auf Putz montiert sein, die mit Geräteeinheit 2 in Datenverbindung steht. Die Geräteeinheit 2 besteht im wesentlichen aus einer elektronischen Reglereinheit 6 die neben dem eigentlichen elektronischen Regler einen Schrittmotor enthält, der über ein Getriebe 20 mit der eigentlichen Mischereinheit 7 und dem in der Mischereinheit 7 angeordneten Regelventil verbunden ist. Die Mischereinheit 7 arbeitet rein mechanisch und besteht im wesentlichen aus einem Mischerkörper 8 der einen Warm- und einen Kaltwasserzulauf 10 und 11 aufweist. Das zugeführte Warm- und Kaltwasser wird innerhalb des Mischerkörpers 8 in dem von der elektronischen Reglereinheit 6 vorgegebenen Verhältnis gemischt und somit die Bedieneinheit 3 vorgegebene Solltemperatur idealerweise erreicht.

Im Bereich des Wasserauslaufs 4 greift üblicherweise die hier nicht weiter zu erörternde Durchflußsteuerung 12 ein. Im Bereich der Durchflußsteuerung 12 ist überdies ein Temperatursensor 13 zur Ist-Temperatur-Erfassung angeordnet, der den jeweiligen Ist-Wert an die Reglereinheit 6 rückmeldet.

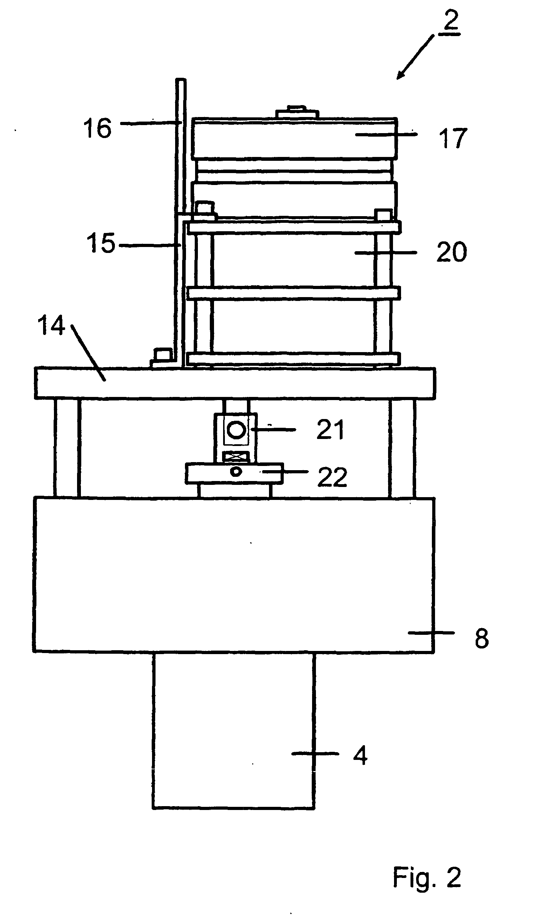

Der genaue Aufbau der kompakten Geräteeinheit 2 ist in Fig. 2 näher dargestellt. Innerhalb dieser Geräteeinheit 2 ist eine Grundplatte 14 mit einem Winkelblech 15 verschraubt. Das Winkelblech 15 trägt überdies ein Halteblech 16 mit einer Platine, die im wesentlichen mit den Komponenten zum Aufbau der elektronischen Reglereinheit 6 bestückt ist. Die elektronische Reglereinheit 6 wirkt auf einen als Stellglied eingesetzten Schrittmotor 17, der über das Getriebe 20 auf einen drehbar gelagerten Stellkörper 21 einwirkt. Entsprechend der jeweiligen Drehstellung des Stellkörpers 21 wird der Warm- oder Kaltwasserzulauf 10 oder 11 mehr oder minder weit geöffnet und ein der jeweiligen Stellung des Stellkörpers 21 entsprechendes Wassergemisch innerhalb des Mischerkörpers 8 erzeugt, das über den Auslauf 4 ausströmt. Der Stellkörper 21 ist gegenüber dem Mischerkörper 8 mittels einer Stopfbuchsmutter 22 abgedichtet.

Die vorstehend erläuterte Geräteeinheit 2 kann bei gleicher Funktionalität selbstverständlich auch in anderer geometrischer Anordnung aufgebaut sein. Wesentlich ist lediglich, daß eine Reglereinheit 6 auf einen Schrittmotor 17 einwirkt und dieser über ein Getriebe 20 einen Stellkörper 21 definiert verstellt. Im Unterschied zu sonst üblichen Dehnstoffelementen oder Bimetalllösungen stellt die jeweilige Stellung des Getriebes 20 eine eindeutig definierte und erfaßbare Größe der augenblicklichen Stellgliedstellung und somit des eingestellten Warm-Kalt-Wasser-Gemischs dar.

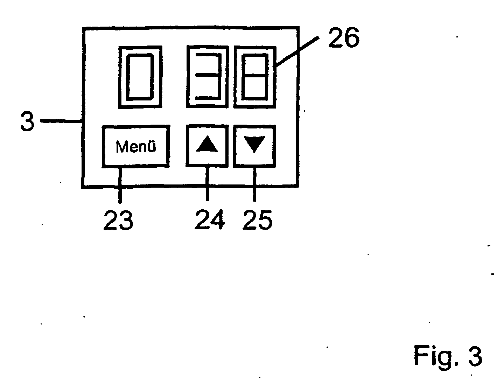

Die über die Reglereinheit 6 auf das Stellglied 21 zu vermittelnden Soll-Wert-Vorgaben werden mittels der Bedieneinheit 3 eingegeben, die in Fig. 3 detaillierter dargestellt ist.

In besonders einfacher und vorteilhafter Ausführung besteht die Bedieneinheit 3 aus einer Menütaste 23 und zwei Auswahl-Tasten 24 und 25 sowie einer dreistelligen alphanumerischen Anzeige 26, wobei im vorliegenden Falle eine Drei-Ziffern-Anzeige dargestellt ist, wobei jedes einzelne alphanumerische Zeichen als herkömmliche Sieben-Segment-Anzeige realisiert ist.

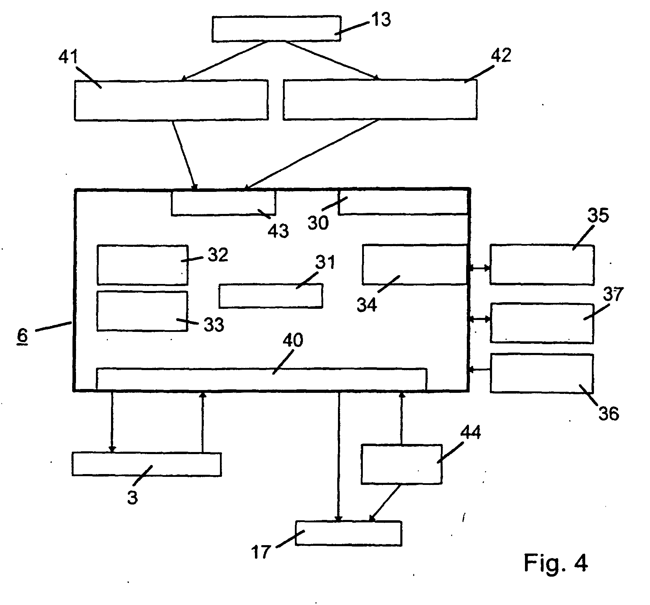

Die in der kompakten Geräteeinheit 2 angeordnete Reglereinheit 6 ist in Fig. 4 näher dargestellt. Die Reglereinheit 6 umfaßt neben einem Mikrocontroller 30 mit einer integrierten Rechnereinheit 31 und einem integrierten Programmspeicher 32 auch einen Datenspeicher 33. Darüber hinaus ist die Reglereinheit 6 mit einer seriellen Schnittstelle 34 zum Anschluß des Schnittstellenmoduls 5 versehen. Der seriellen Schnittstelle 34 ist ein Schnittstellentreiber 35 zugeordnet. Die Reglereinheit 6 steht überdies mit einem Reset-Controller 36 sowie einem Betriebsdatenspeicher 37 in Datenverbindung. Schließlich weist die Reglereinheit 6 diverse digitale Ein- und Ausgänge 40 zum Anschluß der Bedieneinheit 3 sowie des Schrittmotors 17 auf. Der Temperatursensor 13 ist über unterschiedliche Meßverstärker 41 und 42 und einen im Mikrocontroller 30 integrierten Analog / Digitalwandler 40 mit der Reglereinheit 6 verbunden.

Die unterschiedlichen Meßverstärker 41 und 42 sind notwendig, um unterschiedliche Regelgenauigkeiten unterscheidbarer Temperaturbereiche zu realisieren. So kann ein außerhalb der üblichen Bezugstemperatur liegender Temperaturbereich definiert sein, der nur mit einer Grobregelung versehen ist. Dieser üblicherweise größere Temperaturbereich kann mit einem Meßverstärker geringerer Auflösung versehen sein, da die Meßwerte als solche größere Unterschiede aufweisen, als in dem Temperaturbereich, der mit einer feineren Regelung versehen ist.

Über die serielle Schnittstelle 34 können sowohl der Programm- als auch der Datenspeicher parametriert werden. Hierbei erfolgt die anfängliche Parametrierung der Anlage anhand eines herstellerseitig im Programmspeicher 32 des Mikrocontrollers30 abgelegten Programms. Gemäß diesem Programm wird vor der ersten Inbetriebnahme der gesamte Regelbereich abgefahren, bis das durch einen von zwei entsprechenden Endschalter 44 markierte eine Ende des mechanischen Stellbereichs des Stellkörpers 21 erreicht ist. Die diesem einen Endpunkt entsprechende Stellung wird im Datenspeicher 33 gesichert. Bei dem angefahrenen Endpunkt des Regelbereichs wird es sich meist um den Bezug von "nur" Kaltwasser handeln.

Zusätzlich wird im laufenden Betrieb der Anlage jede zur Umsetzung einer Temperaturvorgabe angefahrene Position des Stellglieds bzw. die dieser Stellung entsprechende Sollwertvorgabe in Form eines sich ständig ändernden und verfeinernden Histogramms im Datenspeicher 33 abgelegt.

Der Mischwasserbereiter 1 stellt somit ein selbstlernendes und selbstanpassendes System dar.

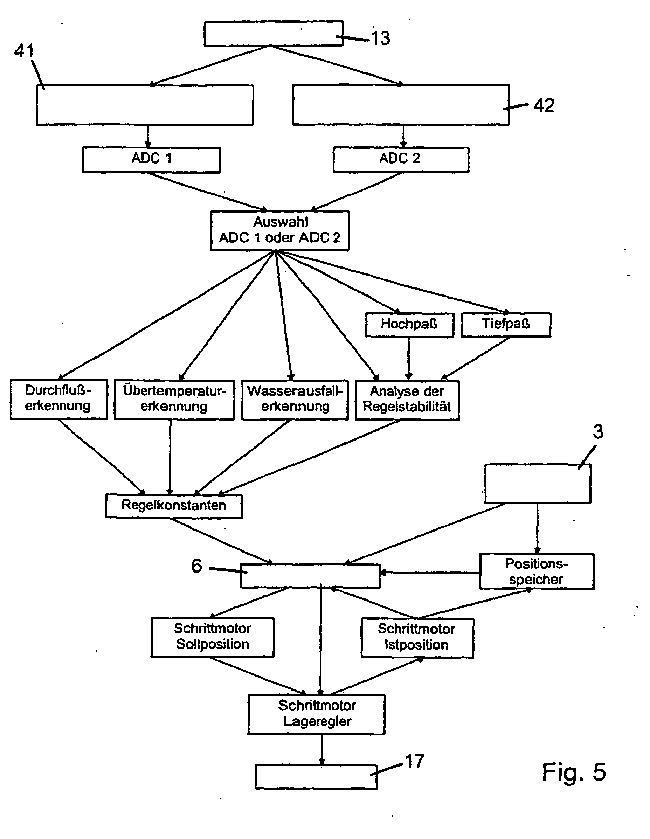

Eine übliche Temperaturregelung ist in einem Flußdiagramm gemäß Fig. 5 dargestellt. Hierbei wirkt der Regler 6 über den Schrittmotor 17 auf das Regelventil ein. Ein erster unterlagerter Regelkreis besteht daher in der Regelung der Ist-/Soll-Position des Schrittmotors 17. Auf diesen Regelkreis wirkt zunächst die Solltemperaturvorgabe der Bedieneinheit 3 ein. Dieser überlagerte Regelkreis zur Temperaturregelung erhält eine Ist-Wert-Rückmeldung über den Temperatursensor 13 der wie gesagt je nach festgestelltem Temperaturbereich über den ersten Meßverstärker 41 oder den zweiten Meßverstärker 42 einwirkt. Je nach Wert wird zur Wahrung der Reglerstabilität der verzögerte Meßwert über einen Hoch- oder Tiefpaß als Ist-Wert auf die Reglereinheit 6 gegeben, wobei eine begleitende Auswertung der vom Temperatursensor 13 übermittelten Werte zur Durchflußerkennung, Übertemperaturerkennung oder Erkennung eines Wasserausfalls genutzt werden. Für den Fall, daß die Gradientenauswertung eines der genannten Ereignisse feststellt, wird dem Regler eine konstante Sollgröße vorgegeben, die den Schrittmotor 17 sofort in eine den Wasserbezug beendende Stellung verfährt.

Somit ist vorstehend ein Verfahren und eine Vorrichtung zur elektronischen Mischwasserbereitung beschrieben, das mittels einer kompakten Geräteeinheit 2 eine Mischwasseraufbereitung in Verbindung mit einem bisher nicht erreichten Bedienkomfort ermöglicht. Aufgrund einer optimalen Abstimmung zwischen der elektronischen Regelung und der mechanischen Stellglieder wird eine hohe Regelgeschwindigkeit bei gleichzeitig extrem geringem sensorischem Aufwand erreicht. Im wesentlichen kann die gesamte Mischwasseraufbereitung allein mittels eines einzigen Temperatursensors 13 erfolgen.

Folglich betrifft die Erfindung auch einen elektronischen Mischwasserbereiter mit einer Bedieneinheit 3 zur Sollwertvorgabe und einer elektronischen Regeleinheit 6, die in Abhängigkeit von einem Temperatursensor 13 zur Ist-Wert-Erfassung über ein mechanisches Stellglied 17 auf eine Regelstrecke zur Mischwasserbereitung einwirkt. Dabei kann erfindungsgemäß vorgesehen sein, daß die elektronische Reglereinheit 6 und das mechanische Stellglied 17 in einer einzigen kompakten Geräteeinheit 2, die zur Unterputzmontage geeignet ist, angeordnet sind.

Dadurch, daß sowohl die elektronische Reglereinheit 6 als auch das mechanische Stellglied 17 in einer einzigen kompakten Geräteeinheit 2 angeordnet sind, kann die gesamte elektronische Mischwasserbereitungsanlage unter Putz montiert werden. Darüber hinaus erlaubt es die kompakte geschlossene Bauform, auf lange und störanfällige Verkabelungen zu verzichten. Überdies ist die elektronische Reglereinheit 6 auf das mechanische Stellglied 17 optimal abgestimmt.

Ein weiterer überraschender Vorteil kann dadurch erzielt werden, daß die Regelstrecke zur Ist-Wert-Erfassung ausschließlich mit einem Temperatursensor 13 in Datenverbindung steht. Mit anderen Worten kann die komplette Regelung zur Mischwasseraufbereitung ausschließlich mit einem einzigen Temperatursensor erfolgen. Der Verzicht auf eine aufwendige und vielfältige Sensorik beseitigt Fehlerquellen und reduziert überdies den ansonsten erforderlichen Kostenaufwand. Die verringerte Sensorik kann durch eine entsprechend geschickte Aufbereitung der Meßwerte kompensiert werden.

Es kann ferner vorgesehen sein, daß das Stellglied auf einen drehbar gelagerten Stellkörper einwirkt, so daß ein seiner Drehstellung entsprechendes Wassergemisch des durch einen Warmwasserzulauf und einen Kaltwasserzulauf zuführbaren Warm- und Kaltwassers innerhalb des Mischerkörpers erzeugbar ist. Dadurch läßt sich ein elektronischer Mischwasserbereiter 1 schaffen, der sich durch einen minimalen Bauraum besonders für die Unterputzmontage eignet, wobei besonders schnelle Reaktions- beziehungsweise Schaltzeiten sowie günstige Abdicht- und Verschleißverhältnisse erzielbar sind.

In vorteilhafter Ausgestaltung kann vorgesehen sein, daß als Stellglied der Regelstrecke ein Schrittmotor 17 vorgesehen ist, der über ein Getriebe 20 mit einem Zwei-Wege-Mischer-ventil 21 in einem Mischerkörper 8 in Wirkverbindung steht, wobei der Mischerkörper 8 je einen Kalt- und Warmwasseranschluß 10 und 11 aufweist. Es ist also zweckmäßig, wenn als Stellglied der Regelstrecke ein Schrittmotor 17 vorgesehen ist, der über ein Getriebe 20 auf ein Zwei-Wege-Mischerventil 21 einwirkt. Diese Anordnung hat den Vorteil, daß die vorgegebene Regelgröße mittels des beschriebenen Stellgliedes unmittelbar und eindeutig umgesetzt wird. Dies stellt eine deutliche Verbesserung gegenüber den ansonsten üblichen Dehnstoffelementen oder Bimetallscheiben zur Mischwasserregelung dar. Die zuletzt genannten Stellglieder arbeiten temperaturabhängig, so daß das Verhalten des Reglers sich je nach eingestellter Temperatur ändern kann.

Eine hochgenaue Temperaturregelung würde daher immer eine entsprechende Überwachung des Stellgliedes erfordern. Dies ist allerdings aufgrund des stark material- und temperaturabhängigen Verhaltens der genannten Stellglieder nur mit erheblichem Aufwand möglich.

Zweckmäßiger Weise umfaßt die Reglereinheit 6 einen Mikrocontroller 30 mit eigener Rechnereinheit 31, sowie einen beschreibbaren Daten- und Programmspeicher 32, 33, wobei die Reglereinheit 6 mit einem Schnittstellenmodul 5 zum Anschluß von Diagnose- und/oder Programmiergeräten verbunden ist.

Der elektronische Mischwasserbereiter 1 ist also vorteilhafterweise mit einem Schnittstellenmodul 5 zum Anschluß von Diagnose- und/oder Programmiergeräten verbunden. Das Schnittstellenmodul 5 kann entweder zur Fehlerdiagnose, Paramatrierung oder zur Einspeicherung von notwendigen Steuerungsprogrammen genutzt werden. Das Schnittstellenmodul 5 kann ferner eine Fernsteuerung der elektronischen Mischwasserbereitung ermöglichen. Die Fernsteuerung kann dabei mittels leitender Verbindung oder mit einer Infrarotoder Funkansteuerung erfolgen. Über das Schnittstellenmodul 5 kann auch ein Support der unter Putz montierten Anlage erfolgen.

In vorteilhafter Ausgestaltung des elektronischen Mischwasserbereiters 1 kann vorgesehen sein, daß die Bedieneinheit 3 eine Anzeige 26, vorzugsweise ein Display, und eine Eingabeeinheit, vorzugsweise ein Tastenfeld 23, 24, 25 umfaßt. Der Tatsache, daß die elektronische Mischwasserbereitung eine ganze Reihe von zusätzlichen Möglichkeiten und einen erhöhten Bedienkomfort bietet, kann also dadurch Rechnung getragen werden, daß als Bedieneinheit 3 eine Anzeige 26 vorgesehen ist, die neben einer Eingabeeinheit mit einem Display versehen ist.

Dabei handelt es sich in einfachster Ausführung um eine dreistellige Anzeige, wobei vorzugsweise jedes alphanumerische Zeichen als Sieben-Segment-Anzeige ausgebildet ist.

Diese Anzeige wird im wesentlichen zur Anzeige der Sollund/oder Ist-Temperatur genutzt.

Die Bedieneinheit weist ferner in einfachster Ausführung eine Menütaste sowie zwei Auswahltasten auf.

Demgemäß kann vorgesehen sein, daß die Anzeige 26 wenigstens drei alphanumerische Zeichen, vorzugsweise jeweils mit einer Sieben-Segment-Anzeige, sowie daß die Eingabeeinheit eine Menütaste 23 und wenigstens zwei Auswahltasten 24 und 25 aufweist.

Die Leistungsfähigkeit des elektronischen Mischwasserbereiters läßt es ohne weiteres zu, einer einzigen derartigen Vorrichtungen eine Vielzahl von Wasserausläufen mit dementsprechend aufbereitetem Mischwasser zu versorgen. Hier kann die CPU des Mischwasserbereiters zur gezielten Ansteuerung ausgewählter Mischwasserausläufe genutzt werden.

Folglich kann vorgesehen sein, daß ein oder mehrere Wasserbezugsgeräte an den elektronischen Mischwasserbereiter 1 anschließbar sind und einzelne Wasserbezugsgeräte über die Bedieneinheit 3 auswähl- und ansteuerbar sind.

## Patentansprüche

1. Verfahren zur Mischwasserbereitung, bei dem ein über eine Bedieneinheit (3) vorgebbarer Soll-Wert über eine elektronische Reglereinheit (6) in Abhängigkeit von einem mittels eines Temperatursensors (13) erfaßten Ist-Werts mittels eines mechanischen Stellgliedes (17) auf eine Regelstrecke zur Mischwasserbereitung einwirkt, wobei das Bezugswasser, dessen Soll-Temperatur über die Bedieneinheit (3) vorgebbar ist, ausschließlich mittels des Temperatursensors (13) zur Ist-Wert-Erfassung abgemischt wird,
**dadurch gekennzeichnet, daß**
zusätzlich eine Gradientenauswertung des mittels des Temperatursensors (13) erfaßten Temperaturverlaufs vorgenommen wird, so daß eine Durchflußerkennung möglich ist, und wobei die Nachführung des Stellgliedes (17) abgeschaltet wird, sobald und solange der Gradient des Temperaturverlaufs einen vorgebbaren Schwellwert unterschreitet.

2. Verfahren nach Anspruch 1, **dadurch gekennzeichnet, daß** das Regelverfahren zwischen zwei Temperaturregelbereichen unterschiedlicher Regelgenauigkeit unterscheidet.

3. Verfahren nach Anspruch 2, **dadurch gekennzeichnet, daß** die Nachführung des Stellgliedes (17) außerhalb eines definierten Temperaturbereiches abgeschaltet wird.

4. Verfahren nach einem der vorhergehenden Ansprüche,
**dadurch gekennzeichnet, daß** die Gradientenauswertung des Temperaturverlaufs für eine Übertemperaturerkennung und/oder eine Wasserausfallserkennung derart genutzt wird, daß im Falle der Erkennung des einen und/oder anderen Ereignisses dem Regler eine Regelkonstante derart vorgegeben wird, daß das Stellglied (17) in eine den Wasserbezug unterbrechende Endstellung verfahren wird.

5. Verfahren nach einem der vorhergehenden Ansprüche,
**dadurch gekennzeichnet, daß** die Reglereinheit (6) selbst derart selbstparametrierend ausgelegt ist, daß in einem ersten Schritt ein Mininmal- und/oder Maximalpunkt des Regelbereichs, vorzugsweise der Kaltwasserzufuhr, angefahren wird und die dieser Stellgliedstellung ensprechende Sollwertvorgabe in einem Datenspeicher (33) abgelegt wird und im weiteren Betrieb die den jeweiligen Temperatureinstellungen entsprechenden Stellgliedstellungen ständig in diesem Datenspeicher (33) in einem Histogramm gespeichert und dieses hierdurch ständig aktualisiert werden.

6. Verfahren nach Anspruch 5, **dadurch gekennzeichnet, daß** im Datenspeicher (33) der Reglereinheit (6) unterschiedliche Temperaturbereiche der Feinregelung angelegt sind.

7. Verfahren nach einem der vorhergehenden Ansprüche,
**dadurch gekennzeichnet, daß** die Reglereinheit (6) mit einer Betriebsdatenerfassung verbunden ist.

8. Verfahren nach einem der vorhergehenden Ansprüche,
**dadurch gekennzeichnet, daß** im Programmspeicher (32) der Reglereinheit (6) ein Programmm-Modul zur thermischen Desinfektion derart abgelegt ist, daß aufgrund der Programmvorgabe ein extrem hoher Temperatursollwert für einen definierten Zeitraum dem Regler vorgegeben wird.

## Claims

1. Method for water mixing, in which a target value predeterminable by way of a control unit (3) acts by way of an electronic regulator unit (6) in dependence on an actual value, which is detected by means of a temperature sensor (13), by means of a mechanical setting element (17) on a regulating path for the water mixing, wherein the draw water, the target temperature of which is predeterminable by way of the control unit (3), is mixed exclusively by means of the temperature sensor (13) for the actual value detection, **characterised in that** in addition a gradient evaluation of the temperature course, which is detected by means of the temperature sensor (13), is undertaken so that a throughflow recognition is possible and wherein the tracking of the setting element (17) is switched off as soon as and as long as the gradient of the temperature course lies below a predeterminable threshold value.

2. Method according to claim 1, **characterised in that** the regulating method distinguishes between two temperature regulating ranges of different regulating accuracy.

3. Method according to claim 2, **characterised in that** the tracking of the setting element (17) is switched off outside a defined temperature range.

4. Method according to one of the preceding claims, **characterised in that** the gradient evaluation of the temperature course is utilised for an excess temperature recognition and/or a water failure recognition in such a manner that in the case of recognition of the one and/or other event a regulating constant is predetermined at the regulator in such a manner that the setting element (17) is moved into an end setting interrupting the water draw.

5. Method according to one of the preceding claims, **characterised in that** the regulator unit (6) is itself designed to be self-parameterising in such a manner that in the first step a minimum and/or maximum point of the regulating range, preferably the cold water feed, is moved to and the target value preset corresponding with this setting element setting is filed in a data memory (33) and in further operation the setting element settings corresponding with the respective temperature settings are constantly stored in this data memory (33) in a histogram and this is thereby constantly updated.

6. Method according to claim 5, **characterised in that** different temperature ranges of the fine regulation are laid down in the data memory (33) of the regulator unit (6).

7. Method according to one of the preceding claims, **characterised in that** the regulator unit (6) is connected with operating data detection means.

8. Method according to one of the preceding claims, **characterised in that** a program module for thermal disinfection is filed in the program memory (32) of the regulator unit (6) in such a manner that by reason of the program preset an extremely high temperature target value is predetermined at the regulator for a defined period of time.

## Revendications

1. Procédé de préparation d'eau mitigée dans lequel une valeur de consigne prédéterminée par l'intermédiaire d'une unité de commande (3) agit, par l'intermédiaire d'une unité de régulation électronique (6) en fonction d'une valeur réelle déterminée par un capteur de température (13), à l'aide d'un organe de réglage (17), sur une chaîne de régulation pour la préparation d'eau mitigée, moyennant quoi l'eau, dont la température de consigne peut être prédéterminée par l'intermédiaire de l'unité de commande (3), est mélangée exclusivement à l'aide du capteur de température (13) qui détermine la valeur réelle, **caractérisé en ce que**, de plus, une analyse de gradient de la courbe de température déterminée à l'aide du capteur de température (13) est réalisée, de façon à ce qu'une détection d'écoulement soit possible, et moyennant quoi l'asservissement de l'organe de réglage (17) est arrêté dès et tant que le gradient de la courbe de température tombe en dessous d'une valeur seuil prédéterminée.

2. Procédé selon la revendication 1, **caractérisé en ce que** le procédé de régulation est distingué entre deux domaines de régulation de température avec des précisions régulation différentes.

3. Procédé selon la revendication 2, **caractérisé en ce que** l'asservissement de l'organe de réglage (17) est arrêté à l'extérieur d'un domaine de température déterminé.

4. Procédé selon l'une des revendications précédentes, **caractérisé en ce que** l'analyse du gradient de la courbe de température est utilisée pour une détection de température excessive et/ou la détection d'une absence d'eau de telle sorte que dans le cas de la détection de l'un et/ou de l'autre événement, une constante de régulation est envoyée au régulateur, de façon à ce que l'organe de réglage (17) soit déplacé dans une position finale terminant l'alimentation en eau.

5. Procédé selon l'une des revendications précédentes, **caractérisé en ce que** l'unité de régulation (6) est auto-paramétrable, de telle sorte que dans une première étape un point minimal et/ou maximal du domaine de régulation, de préférence de l'alimentation en eau froide, est réglé et la valeur de consigne correspondant à cette position de l'organe de réglage est enregistrée dans une mémoire de données (33) et, dans la suite du fonctionnement, les positions de l'organe de réglage correspondant aux réglages de température, sont constamment enregistrées dans cette mémoire de données (33) dans un histogramme et celui-ci est donc constamment actualisé.

6. Procédé selon la revendication 5, **caractérisé en ce que** dans la mémoire de données (33) de l'unité de régulation (6) différents domaines de température de la régulation fine dont enregistrés.

7. Procédé selon l'une des revendications précédentes, **caractérisé en ce que** l'unité de régulation (6) est relié à un saisie des données de fonctionnement.

8. Procédé selon l'une des revendications précédentes, **caractérisé en ce que** dans la mémoire de programme (32) de l'unité de régulation (6) , un module de programme est enregistré pour la désinfection thermique de telle sorte que du fait de la programmation, une valeur de consigne de température extrêmement élevée soit prédéterminée dans le régulateur pour un temps défini.
